# EUROPÄISCHE PATENTSCHRIFT

(11) **EP 2 679 848 B1**
(45) Veröffentlichungstag und Bekanntmachung des Hinweises auf die Patenterteilung: **17.01.2018**
(21) Anmeldenummer: 13002968.9
(22) Anmeldetag: 10.06.2013
(51) Int. Cl.: F16D 13/75, F16D 13/58

(54) **Reibungskupplung mit kraftkompensierter Tellerfeder**
Friction clutch with force-compensated diaphragm
Accouplement à friction avec diaphragme à compensation de force

(30) Priorität: 27.06.2012 DE 102012210972
(43) Veröffentlichungstag der Anmeldung: 01.01.2014
(73) Patentinhaber: Schaeffler Technologies AG & Co. KG, 91074 Herzogenaurach (DE)
(72) Erfinder: Voorspoels, Ludovic, 67850 Offendorf (FR)

(56) Entgegenhaltungen:
- EP-A2- 2 249 054
- DE-A1- 4 132 349
- DE-U1- 29 508 091
- DE-U1-202012 012 631

## Beschreibung

Die vorliegende Erfindung betrifft eine Reibungskupplung gemäß dem Oberbergriff des Patentanspruchs 1. Insbesondere betrifft die Erfindung eine Reibungskupplung mit einer von einer sich an einem Gehäuse mit einem sich zu diesem abhängig von Betriebsbedingungen einstellenden Anstellwinkel abstützenden Tellerfeder unter Zwischenlage von Reibbelägen einer Kupplungsscheibe gegen eine Gegendruckplatte mit einer sich abhängig von einer Kennlinie der Tellerfeder und eines Verschleißes der Reibbeläge einstellenden Anpresskraft vorgespannten und mittels eines Ausrücksystems durch radial innen erfolgende axiale Beaufschlagung der Tellerfeder mit einer sich abhängig von einer Kennlinie der Tellerfeder und eines Verschleißes der Reibbeläge einstellenden Ausrückkraft entspannten Anpressplatte.

Reibungskupplungen werden seit langem in Antriebssträngen von Kraftfahrzeugen bevorzugt an der Schnittstelle einer Kurbelwelle einer Brennkraftmaschine und einer Getriebeeingangswelle eines Getriebes eingesetzt. Hierbei wird - wie beispielsweise aus der DE 42 39 289 A1 bekannt - eine Anpressplatte von einer sich an einem Gehäuse abstützenden Tellerfeder gegen eine Gegendruckplatte verspannt, wobei zwischen Gegendruckplatte und Anpressplatte Reibbeläge einer Kupplungsscheibe verspannt sind. Hierdurch stellt sich aufgrund der Einspanngeometrie eine das über den zwischen Reibbelägen und der Gegen- und Anpressplatte gebildeten Reibschluss maximal übertragbare Kupplungsmoment vorgebende Anpresskraft der Anpressplatte gegenüber der Gegendruckplatte an einem Betriebspunkt der geschlossenen Reibungskupplung ein. Diese Anpresskraft wird zum Öffnen der Reibungskupplung durch ein Ausrücksystem verringert und schließlich aufgehoben, indem die Tellerfeder radial innen beispielsweise an Tellerfederzungen von einem Ausrücksystem axial mit einer Ausrückkraft belastet wird. Hierbei verschwenkt sich die Tellerfeder um einen Auflagepunkt gegenüber dem Gehäuse, so dass sich ein Anstellwinkel eines die Anpressplatte beaufschlagenden Kraftrands der Tellerfeder gegenüber dem Gehäuse verringert.

Hierbei bilden die Tellerfederkraft der Tellerfeder mit ihrer typischen Kennlinie, die Belagfederkraft von zwischen den Reibbelägen angeordneten Belagfedersegmenten und die Blattfederkraft von zwischen der Anpressplatte und dem Gehäuse angeordneten Blattfedern ein die Anpresskraft und die Ausrückkraft bestimmendes Kräftegleichgewicht. Die Kennlinie der Tellerfeder ist dabei über den Belastungsweg mit einem Kraftmaximum versehen, so dass bei kleinen Kupplungs- beziehungsweise Ausrückwegen bis zu dem Kraftmaximum ansteigende und bei größeren Kupplungs- beziehungsweise Ausrückwegen nach dem Kraftmaximum abfallende Ausrückkräfte - ein sogenannter Drop-Off - auftreten, die nur teilweise durch entsprechende Einstellung der Belag- und Blattfederkräfte kompensierbar sind oder diesen Effekt sogar verstärken. Dies führt insbesondere bei Reibungskupplungen im Neuzustand zu einem schwer kontrollierbaren Kraftverhalten bei Ausrückvorgängen.

Bei zunehmendem Verschleiß der Reibbeläge nimmt deren axiale Belagstärke ab, so dass sich im geschlossenen Zustand die Tellerfeder in die andere Richtung verschwenkt, sich die Tellerfederzungen gegen das Ausrücksystem aufstellen und der Anlagewinkel der Tellerfeder im Bereich deren Kraftrands gegenüber dem Gehäuse verkleinert wird. Dies ist mit erhöhten Ausrückkräften verbunden. Zur Kompensation dieser erhöhten Ausrückkräfte sind beispielsweise aus dem oben genannten Dokument kraftgesteuerte Nachstelleinrichtungen bekannt, bei denen ab einer vorgesehen Kraftschwelle eine als Widerlager die Ausrückkraft gegenüber dem Gehäuse abstützende Sensorfeder nachgibt und ein Rampensystem freischaltet, welches die Lagerung der Tellerfeder der aufgrund des Verschleißes in Richtung Gegendruckplatte verlagerten Anpressplatte nachführt. Eine Kompensation der Kraftkennlinie der Tellerfeder mit deren Drop-Off ist hingegen nicht möglich.

Eine Reibungskupplung gemäß dem Oberbegriff des Patentanspruchs 1 ist aus der DE 295 08 091 U1 bekannt.

Aufgabe der Erfindung ist daher, eine Reibungskupplung vorzuschlagen, die mit einfachen Mitteln verschleißbedingt erhöhte Ausrückkräfte und kennlinienbedingt in einem Bereich des Ausrückwegs erniedrigte Ausrückkräfte kompensiert.

Die Aufgabe wird durch eine Reibungskupplung mit den Merkmalen des Anspruchs 1 gelöst. Die Unteransprüche 2 bis 6 geben hierzu vorteilhafte Ausführungsformen wieder.

In der vorgeschlagenen Reibungskupplung mit einer von einer sich an einem Gehäuse mit einem sich zu diesem abhängig von Betriebsbedingungen einstellenden Anstellwinkel abstützenden Tellerfeder unter Zwischenlage von Reibbelägen einer Kupplungsscheibe gegen eine Gegendruckplatte mit einer sich abhängig von einer Kennlinie der Tellerfeder und eines Verschleißes der Reibbeläge einstellenden Anpresskraft vorgespannten und mittels eines Ausrücksystems durch radial innen erfolgende axiale Beaufschlagung der Tellerfeder mit einer sich abhängig von einer Kennlinie der Tellerfeder und eines Verschleißes der Reibbeläge einstellenden Ausrückkraft entspannten Anpressplatte ist dabei die Tellerfeder mit einer vom Anstellwinkel abhängigen Zusatzkraft beaufschlagt. Durch die Abstimmung der Zusatzkraft auf die Anfordernisse einer mit einem Drop-Off belasteten Kennlinie der Tellerfeder und die Anpassung der Zusatzkraft an eine verschleißbedingt erhöhte Ausrückkraft können beide Effekte mittels einer einzigen Kompensationseinrichtung zwischen Tellerfeder und Gehäuse kompensiert werden.

Zwischen Gehäuse und Tellerfeder ist ein die Zusatzkraft bereitstellender Energiespeicher mit einer sich abhängig vom Anstellwinkel ändernden Biegebalkenlänge vorgesehen. Der Energiespeicher kann aus einer oder mehreren über den Umfang verteilten Blattfedern, Lamellen oder dergleichen gebildet sein. Hierbei ist der Energiespeicher einseitig fest an einem Biegebalkenende an der Tellerfeder oder dem Gehäuse und an dem anderen Ende mit vom Anstellwinkel abhängig verlagerbarem, zweitem Biegebalkenende gegen das Gehäuse beziehungsweise die Tellerfeder vorgespannt. Es hat sich hierbei als vorteilhaft erwiesen, wenn der Energiespeicher fest an der Tellfeder aufgenommen und gegenüber dem Gehäuse radial verlagerbar abgestützt ist. Hierbei kann der Energiespeicher mit der Tellerfeder verschweißt, vernietet, verrastet oder in anderer Weise fest verbunden sein. Alternativ kann der Energiespeicher einteilig aus der Tellerfeder gebildet sein. Hierzu können beispielsweise zwischen Tellerfederzungen vorgesehene Aussparungen als Energiespeicher ausgestellt sein.

Zur Bereitstellung eines reibungsarmen Kontakts des abhängig vom Anstellwinkel radial verlagerten Anlagekontakts ist zwischen Gehäuse und Energiespeicher eine auf einem die Zusatzkraft steuernden Abwälzprofil abrollende Lagerrolle vorgesehen. Das Abwälzprofil kann bei fester Einspannung des Energiespeichers an dem Gehäuse an der Tellerfeder oder in bevorzugter Weise bei fest mit der Tellerfeder verbundenem Energiespeicher an dem Gehäuse vorgesehen, beispielsweise in dieses eingeformt oder als Einlegeteil eingelegt sein. Die Vorspannung des Energiespeichers kann bei entsprechender Ausbildung des Abwälzprofils und/oder der Oberflächenform der Lagerrolle abhängig vom Anstellwinkel neben einer radialen Verlagerung axial gegenüber dem Gehäuse verlagert werden, so dass die Vorspannung bei axialer Beabstandung vom Gehäuse zusätzlich gesteigert wird.

Das Abwälzprofil kann als Nocken an dem Gehäuse ausgebildet sein. Die Form des Abwälzprofils kann in der Weise ausgeprägt sein, dass eine Kennlinie des Energiespeichers über den Kupplungs- oder Ausrückweg die Kennlinie der Tellerfeder zumindest teilweise kraftkompensiert, das heißt zumindest teilweise über den Kupplungs- oder Ausrückweg abflacht. Beispielsweise kann ausgehend von einem Betriebspunkt der Reibungskupplung bei geschlossener Reibungskupplung sich eine Biegebalkenlänge des Energiespeichers bei sich gegenüber dem Gehäuse verringernden Anstellwinkel eines Kraftrands der Tellerfeder verkürzen und bei sich gegenüber dem Gehäuse vergrößerndem Anstellwinkel eines Kraftrands der Tellerfeder der Biegebalken verlängern. Zusätzlich kann der axiale Abstand einer Abwälzfläche der Lagerrolle beziehungsweise des Energiespeichers gegenüber dem Gehäuse insbesondere bei zunehmendem Verschleiß der Reibbeläge vergrößert werden, so dass die vergrößerten Ausrückkräfte durch den mit größerer Vorspannung zwischen Gehäuse und Tellerfeder vorgespannte Energiespeicher zumindest teilweise kompensiert werden.

Durch die Wahl der Steifigkeit des Energiespeichers, die Ausbildung von Lagerrolle und Abwälzprofil lässt sich für jede Tellerfeder sowohl im Neuzustand als auch im Verschleißzustand ein gleichmäßigerer Verlauf der Ausrückkraft über den Ausrückweg erzielen.

Die Erfindung wird anhand des in den Figuren 1 bis 8 dargestellten Ausführungsbeispiels näher erläutert. Dabei zeigen:
- Figur 1: eine Reibungskupplung mit einem deren Tellerfeder abhängig von einem Anstellwinkel beaufschlagenden Energiespeicher in systematischem Teilschnitt,
- Figur 2: ein schematisch dargestelltes Detail der Reibungskupplung der Figur 1,
- Figur 3: die Reibungskupplung der Figur 1 im Neuzustand,
- Figur 4: die Reibungskupplung der Figur 1 in ausgerücktem Zustand,
- Figur 5: die Reibungskupplung der Figur 1 im Verschleißzustand,
- Figur 6: eine Darstellung der Funktionsweise der Reibungskupplung der Figur 1,
- Figur 7: eine Kennlinie des Energiespeichers der Figur 1
- und Figur 8: Kennlinien verschiedener Tellerfedern einer Reibungskupplung.

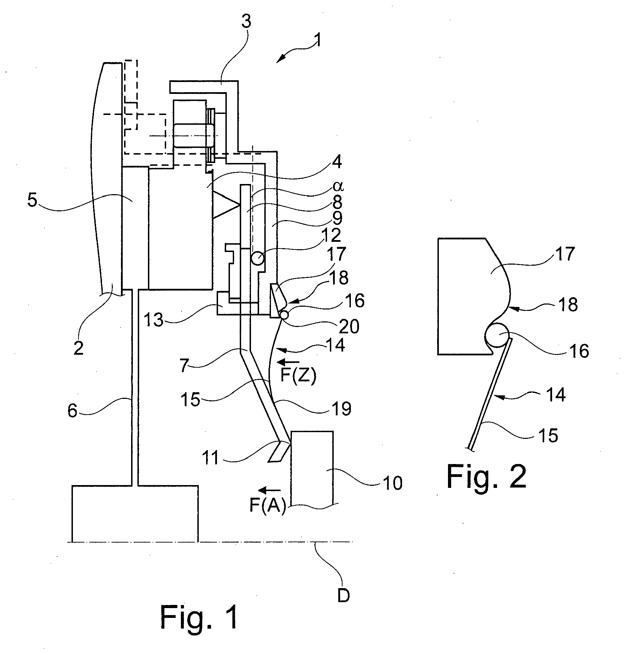

Figur 1 zeigt einen Teilschnitt der um die Drehachse D verdrehbaren Reibungskupplung 1 mit der nur teilweise dargestellten Gegendruckplatte 2 und der an dem Gehäuse 3 drehfest und axial verlagerbaren Anpressplatte 4. Zwischen Gegendruckplatte 2 und Anpressplatte 4 sind die Reibbeläge 5 der Kupplungsscheibe 6 angeordnet. Zwischen dem Gehäuse 3 und der Anpressplatte 4 ist die Tellerfeder 7 verspannt, deren Kraftrand 8 im nicht betätigten Zustand der Tellerfeder 7 die Anpressplatte 4 mit der vorgegebenen Anpresskraft gegen die Gegendruckplatte 2 verspannt und dadurch einen Reibschluss zu den Reibbelägen 5 herstellt. Im nicht betätigten Neuzustand der Reibungskupplung 1 ist damit der Betriebspunkt mit dem Anstellwinkel α des Kraftrands 8 gegenüber der Wandung 9 des Gehäuses 3 hergestellt. Mittels des lediglich systematisch dargestellten Ausrücksystems 10 werden die Tellerfederzungen 11 der Tellerfeder 7 axial in Richtung Gegendruckplatte axial mit der Ausrückkraft F(A) entlang eines Ausrückwegs beaufschlagt, so dass die Tellerfeder 7 um das Lager 12 am Gehäuse 3 verschwenkt und der Kraftrand 8 entlastet unter Verringerung des Anstellwinkels α die Anpresskraft bis zum geöffneten Zustand der Reibungskupplung bei aufgehobenem Reibeingriff zwischen Reibbelägen 5 einerseits und Gegendruckplatte 2 und Anpressplatte 4 andererseits. Hierbei stützt sich die Tellerfeder an dem mit dem Gehäuse 3 verbundenen, die Tellerfeder 7 axial durchgreifenden Widerlager 13 ab.

Zwischen der Tellerfeder 7 und dem Gehäuse 3 ist der Energiespeicher 14 in Form der Lamelle 15 verspannt, der die Tellerfeder 7 in Richtung der Gegendruckplatte 2 mit der Zusatzkraft F(Z) abhängig vom Anstellwinkel α unterstützt. Hierzu ist die Lamelle 15 fest mit der Tellerfeder 7 verbunden oder einteilig aus dieser gebildet und stützt sich mittels der Lagerrolle 16 an dem an dem Gehäuse 3 vorgesehenen Nocken 17 mit dem Abwälzprofil 18 ab. Hierdurch wird abhängig von der Bewegung der Tellerfederzungen 11 ein unterschiedlich langer Biegebalken zwischen den Lagern 19, 20 eingestellt, der eine unterschiedliche Vorspannung des Energiespeichers 14 an der Tellerfeder 7 bewirkt. Durch die Ausbildung des Abwälzprofils 18 mit radialen und gegebenenfalls axialen Anteilen in geometrisch vorgegebener Standard- oder Freiform ist eine beliebige Kennlinie des Energiespeichers 14 über den Ausrückweg einstellbar.

Figur 2 zeigt die Anordnung des Energiespeichers 14 in Form der Lamelle 15, den Nocken 17 mit dem Abwälzprofil 18 sowie der zwischen Lamelle 15 und dem Abwälzprofil 18 abwälzenden Lagerrolle 16 im Detail. Es versteht sich, dass zur Unterstützung der abhängig vom Anstellwinkel α eingestellten Balkenlänge der Lamelle 15 die Lagerrolle im Querschnitt von der runden Form abweichen und beispielsweise elliptisch oder oval ausgebildet sein kann.

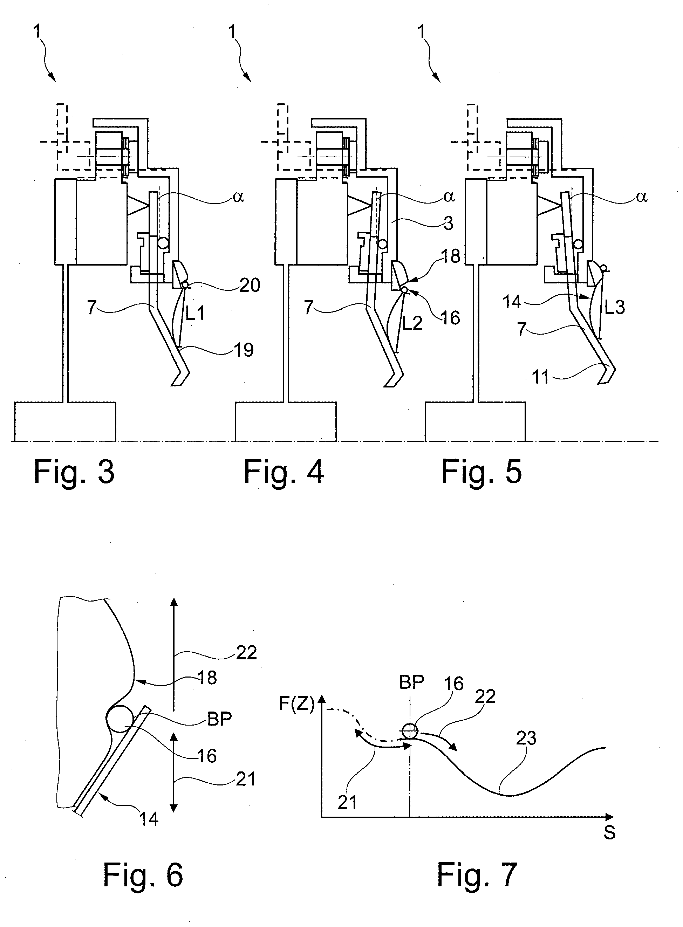

Die Figuren 3 bis 5 zeigen die Reibungskupplung 1 in unterschiedlichen Betriebszuständen jeweils im Halbschnitt mit entsprechender Einstellung der Biegebalkenlänge abhängig vom Anstellwinkel α, der jeweils entsprechenden Betriebszuständen entspricht. Die Ausgangslage der Reibungskupplung 1 ist in Figur 3 in Form der geschlossenen Reibungskupplung im Neuzustand gezeigt. Hierbei ist eine mittlere Zusatzkraft bei einer mittleren Biegebalkenlänge L1 zwischen den Lagern 19, 20 wirksam, die die Anpresskraft der Tellerfeder 7 unterstützt. In Figur 4 ist die Reibungskupplung 1 im ausgerückten Neuzustand dargestellt. Während Ausrückvorgängen verkleinert sich der Anstellwinkel α gegenüber dem Gehäuse 3. Um mit zunehmendem Ausrückweg eine abnehmende Ausrückkraft zu vermeiden, wird die Vorspannung auf die Tellerfeder 7 erhöht, indem die Lagerrolle 16 am Abwälzprofil 18 nach radial innen gleitet und die Biegebalkenlänge L2 verkürzt wird. Die Figur 5 zeigt die Reibungskupplung 1 im Verschleißzustand der Reibbeläge im geschlossenen Zustand, hierbei vergrößert sich der Anstellwinkel α, wodurch sich die Ausrückkräfte erhöhen. Durch die in diesem Betriebszustand nach außen aufgestellten Tellerfederzungen 11 wird die Lagerrolle 16 nach radial außen verlagert, so dass sich eine vergrößerte Biegebalkenlänge L3 einstellt. Die erhöhte Biegebalkenlänge L3 des Energiespeichers 14 vermindert die Vorspannung gegenüber der Tellerfeder 7, so dass während des nachfolgenden Ausrückvorgangs der Anteil des Energiespeichers 14 sinkt und damit die Ausrückkraft gegenüber dem Neuzustand im Wesentlichen auf gleichem Niveau erhalten bleibt.

Die Figuren 6 und 7 verdeutlichen den Weg der die Vorspannung des Energiespeichers 14 beeinflussenden Lagerrolle 16 ausgehend vom Betriebspunkt BP bei geschlossener Reibungskupplung im Neuzustand. In Figur 6 wird die Lagerrolle 16 während eines Ausrückwegs bei betätigter Reibungskupplung in Richtung des Pfeils 21 auf der Abwälzfläche 18 verlagert. Dieser Hin- und Herbewegung während der Öffnungs- und Schließvorgänge der Reibungskupplung ist die in die Richtung des Pfeils 22 verlaufende Verschleißverlagerung der Lagerrolle 16 überlagert. Mit zunehmendem Verschleiß verlagert sich dabei der Betriebspunkt BP in Richtung des Pfeils 22. Wie aus Figur 7 mit der Kennlinie 23 des Energiespeichers 14 über den Weg s hervorgeht, wird bei Betätigungsbewegungen der Reibungskupplung entlang des Pfeils 21 der Drop-Off der Tellerfeder kompensiert, indem die Zusatzkraft F(Z) bei größeren Wegen s vergrößert wird. Bei zunehmendem Verschleiß wandert der Betriebspunkt BP in Richtung des Pfeils 22 zu kleineren Wegen s. Hierdurch wird die Zusatzkraft F(Z) vermindert und den bei Verschleiß erhöhten Ausrückkräften gegengesteuert.

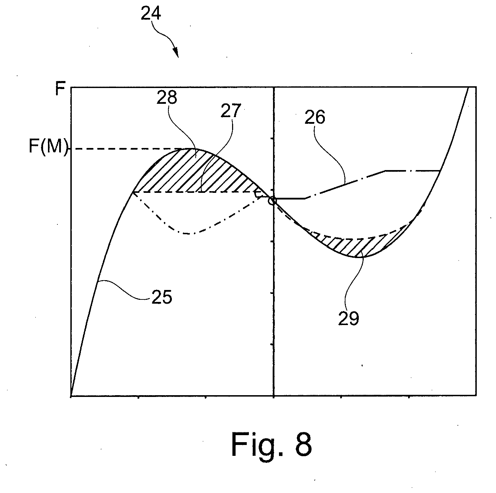

Die Figur 8 zeigt das Diagramm 24 der über den Weg s aufgebrachten Last F mit den Kennlinien 25, 26, 27. Die in durchgezogener Linie dargestellte Kennlinie 25 zeigt das Verhalten der Tellerfeder 7 der Figur 1 mit einem nach dem Kraftmaximum (F(M) auftretenden Drop-Off. Die Kennlinie 26 zeigt das über den Nocken 17 der Figur 1 eingestellte Verhalten des Energiespeichers 14 der Fig. 1. Die Kennlinie 27 zeigt das Verhalten der Tellerfeder 7 mit der unterstützenden Wirkung des Energiespeichers 14. Die Flächen 28, 29 zeigen den durch den Energiespeicher 14 erzielten Kraftgewinn.

### Bezugszeichenliste

- 1: Reibungskupplung
- 2: Gegendruckplatte
- 3: Gehäuse
- 4: Anpressplatte
- 5: Reibbelag
- 6: Kupplungsscheibe
- 7: Tellerfeder
- 8: Kraftrand
- 9: Wandung
- 10: Ausrücksystem
- 11: Tellerfederzunge
- 12: Lager
- 13: Widerlager
- 14: Energiespeicher
- 15: Lamelle
- 16: Lagerrolle
- 17: Nocken
- 18: Abwälzprofil
- 19: Lager
- 20: Lager
- 21: Pfeil
- 22: Pfeil
- 23: Kennlinie
- 24: Diagramm
- 25: Kennlinie
- 26: Kennlinie
- 27: Kennlinie
- 28: Fläche
- 29: Fläche
- BP: Betriebspunkt
- D: Drehachse
- F: Last
- F(A): Ausrückkraft
- F(M): Kraftmaximum
- F(Z): Zusatzkraft
- L1: Biegebalkenlänge
- L2: Biegebalkenlänge
- L3: Biegebalkenlänge
- s: Weg
- α: Anstellwinkel

## Patentansprüche

1. Reibungskupplung (1) mit einer von einer sich an einem Gehäuse (3) mit einem sich zu diesem abhängig von Betriebsbedingungen einstellenden Anstellwinkel (α) abstützenden Tellerfeder (7) unter Zwischenlage von Reibbelägen (5) einer Kupplungsscheibe (6) gegen eine Gegendruckplatte (2) mit einer sich abhängig von einer Kennlinie (25) der Tellerfeder (7) und eines Verschleißes der Reibbeläge (5) einstellenden Anpresskraft vorgespannten und mittels eines Ausrücksystems (10) durch radial innen erfolgende axiale Beaufschlagung der Tellerfeder (7) mit einer sich abhängig von einer Kennlinie (25) der Tellerfeder (7) und eines Verschleißes der Reibbeläge (5) einstellenden Ausrückkraft (F(A)) entspannten Anpressplatte (4), wobei die Tellerfeder (7) mit einer vom Anstellwinkel (α) abhängigen Zusatzkraft (F(Z)) beaufschlagt ist, und zwischen Gehäuse (3) und Tellerfeder (7) ein die Zusatzkraft (F(Z)) bereitstellender Energiespeicher (14) mit einer sich abhängig vom Anstellwinkel (α) ändernden Biegebalkenlänge (L1, L2, L3) vorgesehen ist, **dadurch gekennzeichnet, dass** zwischen Gehäuse (3) und Energiespeicher (14) eine auf einem die Zusatzkraft (F(Z)) steuernden Abwälzprofil (18) abrollende Lagerrolle (16) vorgesehen ist.

2. Reibungskupplung (1) nach Anspruch 1, **dadurch gekennzeichnet, dass** der Energiespeicher (14) fest an der Tellfeder (7) aufgenommen und gegenüber dem Gehäuse (3) radial verlagerbar abgestützt ist.

3. Reibungskupplung (1) nach Anspruch 2, **dadurch gekennzeichnet, dass** der Energiespeicher (14) einteilig aus der Tellerfeder (7) gebildet ist.

4. Reibungskupplung (1) nach einem der Ansprüche 1 bis 3, **dadurch gekennzeichnet, dass** das Abwälzprofil (18) als Nocken (17) an dem Gehäuse (3) vorgesehen ist.

5. Reibungskupplung (1) nach einem der Ansprüche 1 bis 4, **dadurch gekennzeichnet, dass** ausgehend von einem Betriebspunkt (BP) bei geschlossener Reibungskupplung sich eine Biegebalkenlänge (L2) bei sich gegenüber dem Gehäuse (3) verringernden Anstellwinkel (α) eines Kraftrands (8) der Tellerfeder (7) verkürzt.

6. Reibungskupplung (1) nach einem der Ansprüche 1 bis 5, **dadurch gekennzeichnet, dass** ausgehend von einem Betriebspunkt (BP) bei geschlossener Reibungskupplung sich eine Biegebalkenlänge (L3) bei sich gegenüber dem Gehäuse (3) vergrößerndem Anstellwinkel (α) eines Kraftrands (8) der Tellerfeder (7) verlängert.

## Claims

1. Friction clutch (1) having a pressing plate (4) which is prestressed by a cup spring (7) which is supported on a housing (3) at a setting angle (α) which is set with respect to the latter in a manner which is dependent on operating conditions, with the interposition of friction linings (5) of a clutch disc (6), against a counterpressure plate (2) by way of a pressing force which is set in a manner which is dependent on a characteristic curve (25) of the cup spring (7) and on wear of the friction linings (5), which pressing plate (4) is relieved by way of a release force (F(A)) which is set in a manner which is dependent on a characteristic curve (25) of the cup spring (7) and on wear of the friction linings (5), the cup spring (7) being loaded with an additional force (F(Z)) which is dependent on the setting angle (α), and an energy store (14) which provides the additional force (F(Z)) with a beam length (L1, L2, L3) which changes in a manner which is dependent on the setting angle (α) being provided between the housing (3) and the cup spring (7), **characterized in that** a bearing roller (16) which rolls on a rolling profile (18) which controls the additional force (F(Z)) is provided between the housing (3) and the energy store (14).

2. Friction clutch (1) according to Claim 1, **characterized in that** the energy store (14) is received fixedly on the cup spring (7) and is supported such that it can be moved radially with respect to the housing (3).

3. Friction clutch (1) according to Claim 2, **characterized in that** the energy store (14) is formed in one piece from the cup spring (7).

4. Friction clutch (1) according to one of Claims 1 to 3, **characterized in that** the rolling profile (18) is provided as a cam (17) on the housing (3).

5. Friction clutch (1) according to one of Claims 1 to 4, **characterized in that**, starting from an operating point (BP) with a closed friction clutch, a beam length (L2) shortens in the case of a setting angle (α) of a force edge (8) of the cup spring (7) decreasing with respect to the housing (3).

6. Friction clutch (1) according to one of Claims 1 to 5, **characterized in that**, starting from an operating point (BP) with a closed friction clutch, a beam length (L3) lengthens in the case of a setting angle (α) of a force edge (8) of the cup spring (7) increasing with respect to the housing (3).

## Revendications

1. Embrayage à friction (1) présentant un ressort en plateau (7) s'appuyant sur un boîtier (3) à un angle de pose (α) qui s'établit en fonction de conditions de fonctionnement, avec interposition de garnitures de friction (5) d'un disque d'embrayage (6) précontraint contre une plaque (2) de contre-poussée sous une force de poussée qui s'établit en fonction d'une ligne caractéristique (25) du ressort (7) en plateau et de l'usure des garnitures de friction (5), et une plaque de poussée (4) détendue au moyen d'un système de recul (10) qui applique sur le ressort (7) en plateau une force de recul (F(A)) axiale, orientée radialement vers l'intérieur et qui s'établit en fonction d'une ligne caractéristique (25) du ressort (7) en plateau et de l'usure des garnitures de friction (5),
une force supplémentaire (F(Z)) qui dépend de l'angle de pose (α) étant appliquée sur le ressort (7) en plateau et un accumulateur d'énergie (14) qui délivre la force supplémentaire (F(Z)) étant prévu entre le boîtier (3) et le ressort (7) en plateau et présentant une longueur (L1, L2, L3) de poutre fléchissante qui varie en fonction de l'angle de pose (α),
**caractérisé en ce que**
un rouleau de palier (16) qui roule sur un profil de roulement (18) qui commande la force supplémentaire (F(Z)) est prévu entre le boîtier (3) et l'accumulateur d'énergie (14).

2. Embrayage à friction (1) selon la revendication 1, **caractérisé en ce que** l'accumulateur d'énergie (14) est reçu solidairement sur le ressort (7) en plateau et s'appuie sur le boîtier (3) en pouvant se déplacer radialement.

3. Embrayage à friction (1) selon la revendication 2, **caractérisé en ce que** l'accumulateur d'énergie (14) est formé d'une seule pièce avec le ressort (7) en plateau.

4. Embrayage à friction (1) selon l'une des revendications 1 à 3, **caractérisé en ce que** le profil de roulement (18) est prévu sous la forme d'une came (17) ménagée sur le boîtier (3).

5. Embrayage à friction (1) selon l'une des revendications 1 à 4, **caractérisé en ce que** partant d'un point de fonctionnement (BP), l'embrayage à friction étant fermé, la longueur (L2) d'une poutre fléchissante se raccourcit lorsque l'angle de pose (α) d'un bord (8) d'application de force sur le ressort (7) en plateau diminue par rapport au boîtier (3).

6. Embrayage à friction (1) selon l'une des revendications 1 à 5, **caractérisé en ce que** partant d'un point de fonctionnement (BP), l'embrayage à friction étant fermé, la longueur (L3) de la poutre fléchissante augmente lorsque l'angle de pose (α) d'un bord (8) d'application de force du ressort (7) en plateau augmente par rapport au boîtier (3).
